# EUROPEAN PATENT SPECIFICATION

(11) **EP 3 798 375 B1**
(45) Date of publication and mention of the grant of the patent: **01.05.2024**
(21) Application number: 20198534.8
(22) Date of filing: 25.09.2020
(51) Int. Cl.: E03C 1/04, F16B 7/14

(54) **STEPLESS LIFTABLE DEVICE AND STEPLESS LIFTABLE FAUCET**
STUFENLOS ANHEBBARE VORRICHTUNG UND STUFENLOS ANHEBBARER WASSERHAHN
DISPOSITIF RELEVABLE À VARIATION CONTINUE ET ROBINET RELEVABLE À VARIATION CONTINUE

(30) Priority: 25.09.2019 CN 201910910941
(43) Date of publication of application: 31.03.2021
(73) Proprietor: Xiamen Solex High-tech Industries Co., Ltd., 361000 Fujian (CN)
(72) Inventor: WEI, Zhijian, Xiamen, Fujian 361000 (CN); ZHAO, Zhenwen, Xiamen, Fujian 361000 (CN); YAN, Xiaohu, Xiamen, Fujian 361000 (CN); HU, Lihong, Xiamen, Fujian 361000 (CN)
(74) Representative: Verscht, Thomas Kurt Albert

(56) References cited:
- EP-A1- 0 792 970
- EP-A1- 2 312 065
- AT-B- 340 208
- JP-A- S52 145 666

## Description

### FIELD OF THE DISCLOSURE

The present disclosure relates to a liftable device, in particular relates to a stepless liftable device and a stepless liftable faucet,

### BACKGROUND OF THE DISCLOSURE

In existing techniques, there are two kinds of structures with adjustable water outlet height (such as a stepless liftable faucet). A first kind uses the elastic deformation of the plastic fastener, and the liftable rod comprises a slot, when it is lifted and lowered and is locked to the slot, it can be stopped. It can be reset when being separated from the fastener, to achieve the adjustment, but the guiding accuracy is poor, and it cannot meet the adjustment of any height position; a second kind uses the friction resistance force between the liftable rod and an outer wall to realize the adjustment of the water outlet, for example, Chinese Patent CN205065114U, a faucet with liftable and rotating struction comprises a faucet body, a water outlet valve body, a eater inlet hose, and a liftable and rotating structure. The liftable and rotating structure is disposed in the faucet body; the faucet body and the water outlet valve body are disposed separately, and the liftable and rotating structure drives the water outlet valve body to move radially and to rotate circumferentially; the liftable and rotating structure comprises a straight liftable pipe, a limiting and friction unit, a fixed pipe joint and a connecting base; one end of the straight liftable pipe is fixedly connected to the water outlet valve body, and the other end is connected to the connecting base; the limiting and friction unit surrounds an outer circumference of the connecting base and is integrated to be disposed in the fixed pipe joint. However, due to the influence of two factors of a gesture of the lifting process and a weight of the upper object, a force of the lifting is strong, a force of the lowering force is weak, force values of the lifting and lowering operation differ greatly, and the user feeling is not good.

With regard to the prior art attention is drawn to AT 340 208 B from which a connection piece for a rod inserted in a pipe-like piece and slidable with respect to the pipe.

Further, from JP S52 145666 A an expansion tube is known.

Further, from EP 0 792 970 A1 a water tap for the purpose of dispensing hot water intended for arrangement on a horizontal face is known, comprising a shut-off cock which is connectable, by an inlet thereof, to a hot-water source and connected, by an outlet thereof and via a water supply, to a pivotable discharge, of which discharge in inlet side comprises a straight length of tubing, the straight length of tubing being clampingly arranged in a guide of a tube guide housing so that the discharge is adjustable in the direction of the longitudinal center line of the straight length of tubing and retains this position in any adjusting position under the influence of the clamping guide. The water supply comprises a flexible hose being sufficiently flexible to keep forming a loop without buckling during adjustment of the discharge, but still sufficiently rigid to undergo only a slight degree of torsion during rotation of the discharge. Heat-insulating material is provided in the discharge and the tube guide housing.

Furthermore, from EP 2 312 065 A1 a telescopic water outlet is known.

### BRIEF SUMMARY OF THE DISCLOSURE

The present invention relates to a stepless liftable device as defined in claim 1. Further, the present invention relates to a stepless liftable faucet as defined in claim 12.

Preferred embodiments of the invention are disclosed in the dependent claims.

The present disclosure provides a stepless liftable device and a stepless liftable faucet overcome the deficiencies of the stepless liftable faucets in existing techniques.

In an embodiment, side walls of the one or more sliders facing the movable pipe extend inward to define mounting grooves, friction pads is fixedly disposed in the mounting grooves, the friction pads at least partially protrudes out of opening of the mounting grooves, and the friction pads comprise the friction layers.

In an embodiment, the mounting base has a ring shape, the movable pipe is connected in the mounting base, the one or more sliders comprises a plurality of sliders arranged in an annular shape at intervals, and each of the one or more sliders cooperates with and is disposed with a corresponding one of the one or more elastic bodies.

In an embodiment, the movable pipe is a circular pipe, and the one or more sliders are arc shapes cooperating with the movable pipe.

In an embodiment, the one or more sliders are fixedly disposed with one or more guide columns disposed along the sliding directions of the one or more sliders, the mounting base is disposed with one or more sliding grooves disposed along the sliding directions of the one or more sliders, and the one or more guide columns cooperate with and are connected to the one or more sliding grooves.

In an embodiment, the cavity wall of the mounting cavity comprises a guide wall, and the one or more sliders are configured to be slidably connected to the guide wall.

In an embodiment, the mounting cavity has a cavity bottom, and the cavity bottom defines a limit portion configured to limit a maximum sliding position of the one or more sliders.

In an embodiment, the mounting base comprises a guide base and a guide cover fixedly covering the guide base, and the guide base cooperates with the guide cover to define the mounting cavity surrounding the movable pipe.

In an embodiment, the guide cover is disposed with the one or more sliding grooves, the one or more sliders are fixedly disposed with one or more guide columns, and the one or more guide columns cooperate with and are connected to the one or more sliding grooves.

In an embodiment, a rear surface of the guide cover is disposed with one or more fixed column having a number equal to the number of the one or more slider, and end surfaces of the one or more fixed columns extend inward to define the one or more sliding grooves.

In an embodiment, the one or more elastic bodies abut and are connected between the guide cover and the one or more sliders.

In an embodiment, the guide base comprises an inner wall, a cavity wall of the mounting cavity comprises the inner wall, and the one or more sliders cooperate with and are connected to the inner wall.

In an embodiment, the guide base comprises a bottom ring and a peripheral wall, a lower peripheral edge of the peripheral wall and an outer peripheral edge of the bottom ring are fixedly connected together, and an inside of the peripheral wall, the bottom ring, and the guide cover define the mounting cavity.

In an embodiment, a port of the mounting hole comprises a stepped hole section, the mounting base is disposed in the stepped hole section, the fixing member is disposed on the stepped hole section, and the mounting base is fixedly clamped between the fixing member and a step surface of the stepped hole section.

In an embodiment, the fixing member comprises a compression nut, and the compression nut is screwed in the mounting hole and abut an upper side of the mounting base.

In an embodiment, the fixing member further comprises a decorative nut, the decorative nut comprises an outer ring portion and a screw ring fixedly disposed below the outer ring portion, the screw ring is screwed in the compression nut, and the outer ring portion is fixedly connected to and cover an upper side of the compression nut.

In an embodiment, the movable pipe is a circular pipe, the mounting base has a ring shape, the movable pipe is connected to an inner side of the mounting base, the mounting cavity is disposed with a plurality of sliders of the one or more sliders annularly disposed at intervals, each of the plurality of sliders cooperates with and is disposed with a corresponding one of the one or more elastic bodies, and the friction layers of the one or more sliders define arc structures cooperating with the movable pipe.

In order to solve the technical problem, a second technical solution of the present invention is as follows.

A stepless liftable faucet comprises a fixed sleeve, a water inlet pipe, a water outlet pipe, a faucet body, a liftable pipe configured to be lifted up and lowered down and be slidably connected to the fixed sleeve, a liftable body fixedly disposed on the liftable pipe, a water outlet portion fixedly disposed on the liftable body and the stepless liftable device according to claim 1; The faucet body is connected to the water inlet pipe and the water outlet pipe to control water outflow, the water outlet pipe passes through the fixed sleeve, the liftable pipe and the faucet body and is connected to the water outlet portion; the mounting member comprises the faucet body, and the movable pipe comprises the liftable pipe.

In an embodiment, a weight hammer is disposed on the water outlet pipe.

In an embodiment, the faucet body is disposed an outer side of the fixed sleeve.

In an embodiment, the faucet body and the fixed sleeve are disposed separately.

Compared with existing techniques, the technical solution of the present disclosure has the following advantages.

The mounting cavity of the mounting base is disposed with the one or more sliders and the one or more elastic bodies, the sliding directions of the one or more sliders are obliquely arranged, when the positions of the one or more sliders became higher, the one or more sliders are further away from the movable pipe, the one or more elastic bodies are connected to the one or more sliders to generate downward elastic forces along the sliding directions of the one or more sliders, the friction layers of the one or more sliders cooperate with the outer peripheral wall of the movable pipe to generate friction forces, and the friction layers of the one or more sliders tightly abut the outer peripheral wall of the movable pipe, to generate the friction forces, to hold the movable pipe tightly, so that the movable pipe and the mounting member remain relatively static, to achieve stepless lifting and lowering, when being applied to a stepless liftable faucet, the faucet can be raised and lowered and be pulled out. The sliding directions of the one or more sliders are obliquely arranged, the higher the positions are, the further away from the movable pipe, a force value of the lifting decreases, a force value of the lowering increases, and the force value of the lifting is approximate to the force value of the lowering, so that an external force required during a whole lifting and lowering process is uniform, and the experience is more good.

The side walls of the one or more sliders extend inward to define mounting grooves facing the movable pipe, the friction pads are fixedly disposed in the mounting grooves, and the friction pads comprises the friction layers, the assembly is convenient, and the structure is simple.

The one or more sliders comprise a plurality of sliders and are annularly disposed at intervals, a holding force is large, and is stable and reliable.

The mounting base comprises a guide base and a guide cover fixedly covering the guide base, the guide base and the guide cover cooperate to define the mounting cavity surrounding the movable pipe, the structure is simple, and the assembly is convenient.

A rear surface of the guide cover is fixedly disposed with one or more fixed columns, end surfaces of the one or more fixed columns extend inward to define sliding grooves, the one or more sliders are fixedly disposed with one or more guide columns, the one or more guide columns cooperate with and are connected to the one or more sliding grooves, and the structure is compact.

The port of the mounting hole comprises a stepped hole section, the mounting base is disposed in the stepped hole section, the fixing member is disposed in the stepped hole section, and the mounting base is fixedly clamped between the fixing member and the stepped surface of the stepped hole section, the assembly is convenient.

The compression nut is screwed to an inner side of the mounting hole and is connected to and abuts an upper side of the mounting base, the decorative nut comprises an outer ring portion and a screw ring fixedly disposed below the outer ring portion, the screw ring is screwed to the compression nut, the outer ring portion is fixedly connected to and covers an upper side of the compression nut, the assembly is convenient, and a connection strength is high.

The movable pipe is a circular pipe, the mounting base has a ring-shape, and the plurality of sliders are annularly disposed in the mounting cavity at intervals, the friction layers of the one or more sliders define arc-shaped structures cooperating with the movable pipe, the movable pipe can rotate relative to the mounting member, moreover, stepless rotation adjustment is achieved.

### BRIEF DESCRIPTION OF THE DRAWINGS

The present disclosure will be further described below in combination with the accompanying drawings and embodiments.
FIG. 1 illustrates an exploded perspective view of a stepless liftable device of an embodiment.
FIG. 2 illustrates a first cross-sectional view of the stepless liftable device of the embodiment.
FIG. 3 illustrates a second cross-sectional view of the stepless liftable device of the embodiment.
FIG. 4 illustrates a perspective view of a stepless liftable faucet using the stepless liftable device.
FIG. 5 illustrates one of a first partial cross-sectional view of the stepless liftable faucet using the stepless liftable device.
FIG. 6 illustrates a second partial cross-sectional view of the stepless liftable faucet using the stepless liftable device.
FIG. 7 illustrates an exploded perspective view of the stepless liftable faucet using the stepless liftable device.
FIG. 8 illustrates a perspective view of another stepless liftable faucet using the stepless liftable device.
FIG. 9 illustrates a partial cross-sectional view of another stepless liftable faucet using the stepless liftable device.

### DETAILED DESCRIPTION OF THE EMBODIMENTS

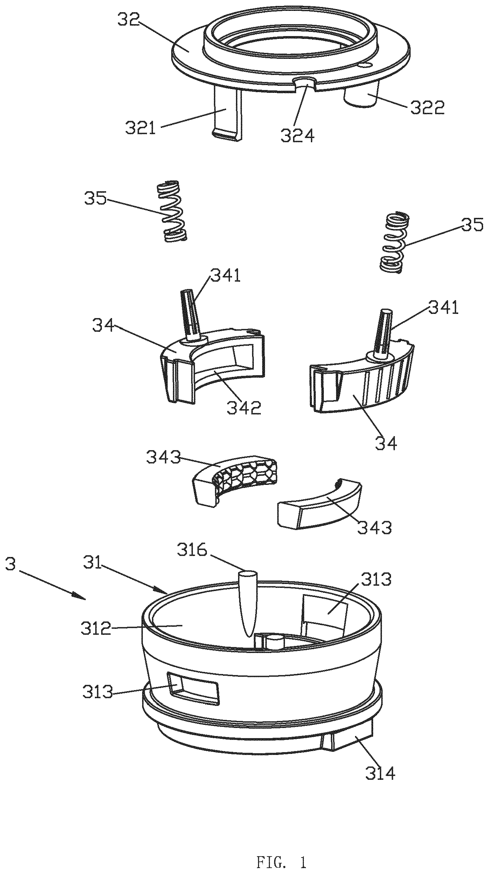

Referring to FIGS. 1-3, the stepless liftable device comprises a mounting member 1, a movable pipe 2 and a mounting base 3 fixedly disposed on the mounting member 1, the movable pipe 2 is a circular pipe.

The mounting base 3 comprises a guide base 31 and a guide cover 32 fixedly covering the guide base 31; the guide base 31 comprises a bottom ring 311 and a peripheral wall 312, and a lower periphery of the peripheral wall 312 and an outer periphery of the bottom ring 311 are fixedly connected together and preferably integrally formed; the guide cover 32 and the bottom ring 311 are both annular structures; an inside of the peripheral wall 312, the guide cover 32 and the bottom ring 311 define a mounting cavity 33 configured to surround the movable pipe 2 and to face the movable pipe 2. The fixed covering, in an example, uses a following structure: the peripheral wall 312 is disposed with a through hole 313 penetrating an inner side and an outer side, the guide cover 32 is fixedly disposed with a cantilever 321, a tail end of the cantilever 321 is disposed with a hook, and the hook is hooked in the through hole 313 to enable the guide cover 32 to be fixedly covered on the guide base 31, the fixing structure adopts a fastener structure, but it is not limited thereto, as needed, other structures can also be adopted, such as threaded connection, screw connection, welding, etc. The peripheral wall 312 of the guide base 31 is fixedly disposed with a positioning column 316, the guide cover 32 extends inward to define a notch 324, and the positioning column 316 cooperates with the notch 324, to restrict rotation, and to enhance the connection strength.

An inner side of the mounting cavity 33 is disposed with one or more sliders 34 and one or more elastic bodies 35, in this embodiment, the device is disposed with two sliders 34, and each of the two sliders 34 cooperates with an elastic body 35, the two sliders 34 are radially symmetrically disposed, in an example, more than two sliders can be arranged in an annular array. The one or more sliders 34 can slide relative to the mounting base 3, and sliding directions of the one or more sliders 34 are obliquely arranged, and the one or more sliders 34 are further away from the movable pipe 2 when the positions became higher, A represents the sliding directions of the one or more sliders in Figs. The one or more elastic bodies 35 are connected to the one or more sliders 34 to generate downward elastic forces along the sliding directions of the one or more sliders 34. In an embodiment, a rear surface of the guide cover 32 is fixedly disposed with one or more fixed columns 322 with its number being equal to the number of the sliders 34, and end surfaces of the one or more fixed columns 322 extend inward to define one or more sliding grooves 323 disposed along the sliding directions, one or more guide columns 341 are fixedly disposed above the one or more sliders 34 along the sliding directions, and the one or more guide column 341 cooperate with and are connected to the one or more sliding grooves 323; the peripheral wall 312 of the guide base 31 comprises an inner wall, and the one or more sliders 34 cooperate with and is slidably connected to the inner wall, the inner wall is, for example, a conical wall; a cooperation of the one or more guide columns and the one or more sliding grooves and a cooperation of the one or more sliders and the inner wall control the one or more sliders to slide, the guiding accuracy is high, and the force is stable and reliable; the one or more guide columns 341 can be circular trapezoidal structures with large heads and small tails, and the one or more sliding grooves 323 are cylindrical grooves; the one or more elastic bodies 35 are springs, which surround outer sides the one or more guide columns 341 and abut and are connected between the end surfaces of the one or more fixing columns 322 of the guide cover and the slider 34. The bottom ring 311 of the guide base 31 defines a cavity bottom of the mounting cavity 33, and the cavity bottom defines a limit portion configured to limit a maximum sliding position of the one or more sliders 34.

The one or more sliders 34 are disposed with friction layers, and side walls of the one or more sliders 34 facing the movable pipe 2 extend inward to define mounting grooves 342, the mounting groove 342 are fixedly disposed with friction pads 343, the friction pads 343 at least partially protrudes out of openings of the mounting grooves 342, and the friction pads 343 comprises the friction layers. In this embodiment, the one or more sliders 34 comprise arc structures configured to cooperate with the movable pipe 2, or the friction pads 343 define arc structures configured to cooperate with the movable pipe, a central angle of the arc structures of the one or more sliders 34 ranges between 90 degrees and 180 degrees, a radius (or a diameter) is slightly larger than an outer diameter of the movable pipe 2, a radius of the friction pads 343 cooperate with a radius of the movable pipe 2, and the friction pads 343 are made of silicone or rubber material and have a preset elasticity, the radius of the friction pads 343 is slightly smaller than a radius of the one or more sliders 34. The friction layers cooperate with an outer wall of the movable pipe 2 (i.e., an outer peripheral wall of the movable pipe 2) to generate a friction force, and the arc structures are configured to enhance a holding force for the movable pipe.

The mounting member 1 extends inward to define a mounting hole 11, a port of the mounting hole 11 comprises a stepped hole section 111, the mounting base 3 is fixedly disposed in the stepped hole section 111 of the mounting hole 11, a fixing member 4 is further configured to be fixedly connected to the stepped hole section 111 of the mounting hole 11, the mounting base 3 is fixedly clamped between the fixing member 4 and a stepped surface of the stepped hole section 111, and the mounting base 3 is fixedly connected to the stepped hole section 111 of the mounting member 1 through the fixing member 4. In this embodiment, the fixing member 4 comprises a compression nut 41 and a decorative nut 42; the compression nut 41 (having an internal thread and an external thread) is screwed to the stepped hole section 111 of the mounting hole 11 and is connected to and abut an upper side of the guide cover 32 of the mounting base 3; the decorative nut 42 comprises an outer ring portion and a screw ring fixedly disposed below the outer ring portion, the screw ring is screwed to the compression nut, and the outer ring portion is connected to and covers an upper side of the compression nut; in an embodiment, the stepped hole section 111 comprises a rotation-limiting groove, the peripheral wall 312 of the guide base 31 protrudes to define a rotation-limiting protrusion 314, and the rotation-limiting protrusion 314 cooperate with and is disposed in the rotation-limiting groove to limit rotation, and the assembly is convenient.

The movable pipe 2 is configured to be lifted up and lowered down and is disposed in the mounting hole 11 of the mounting member 1, under elastic forces of the one or more elastic bodies 35, the one or more sliders 34 slide downward in the sliding directions, so that the friction pads 343 of the one or more sliders 34 tightly abut the outer peripheral wall of the movable pipe 2, to generate the friction force, to hold the movable pipe 2 tightly, so that the movable pipe 2 and the mounting member 1 are relatively static to achieve stepless lifting and lowering.

The movable pipe 2 is a circular pipe, the one or more sliders 34 has arc shapes, and the friction layer is arc-shaped, therefore, the movable pipe 2 can rotate relative to the mounting member 1, and can achieve stepless rotation adjustment.

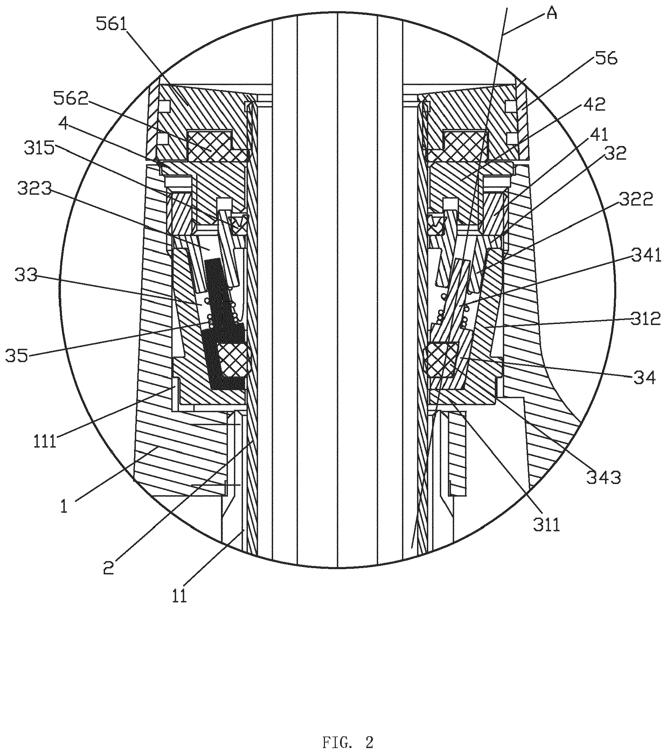

Referring to FIG. 2, FIG. 2 illustrates a cross-sectional view when the movable pipe 2 is lowered. When the movable pipe 2 moves downward, on the one hand, the friction forces exists between the movable pipe 2 and the one or more sliders 34, and the friction force enables the slider 34 to be subjected to a downward force, on the other hand, the one or more elastic bodies 35 also abut the one or more sliders 34 to enable the one or more sliders 34 to be disposed at a lowest position, that is, abut the bottom ring 311, a cooperation between the two can increase a pressure force between the friction pads 343 and the movable pipe 2, so as to tightly hold the movable pipe 2, the friction forces are large, at this time, a lowering force F2 (load lowering) = f2 (no-load lowering)-G (a count weight, such as a stepless liftable faucet device, that is, a count weight of the entire faucet), a value of a lowering force increases due to the friction forces increasing.

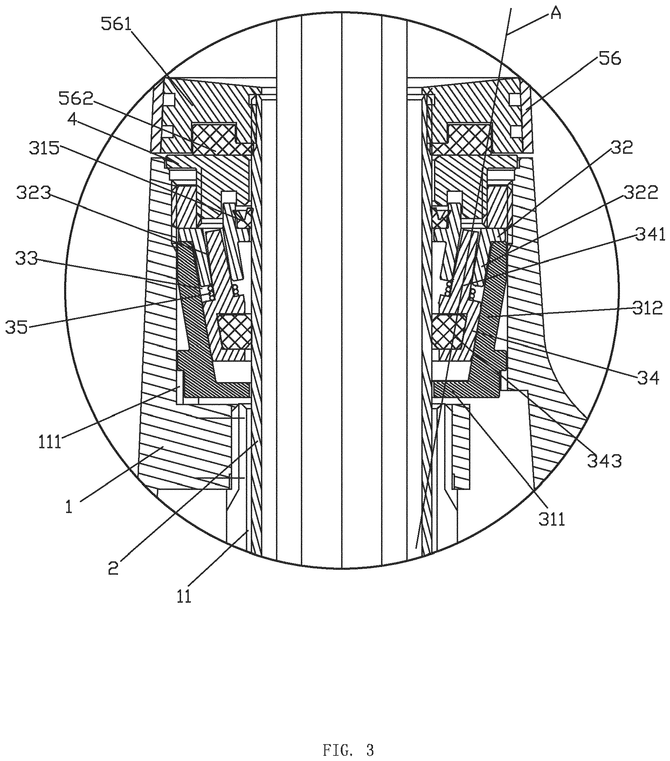

Referring to FIG. 3, FIG. 3 illustrates a cross-sectional view when the movable pipe 2 is lifted. The movable pipe 2 moves upward, the friction forces exist between the movable pipe 2 and the one or more sliders 34, the friction forces will enable the one or more sliders 34 be subjected to an upward force, to overcome elastic forces of the one or more elastic bodies 35, therefore, the one or more elastic bodies 35 are compressed, to enable the one or more sliders 34 to obliquely slide upward (during a sliding process, the elastic forces increase, the pressing forces between the friction pads and the movable pipe are opposite, and friction forces is relatively lowered, therefore, when sliding to a preset distance, the one or more sliders and the mounting member 1 are relatively static), so that the pressing forces between the friction pads 343 and the movable pipe 2 decreases, and the friction forces greatly decreases, at this time, the lifting force F1 (load lifting) = f1 (no-load lifting) + G, and the force value of the lifting decreases due to the friction forces decreasing.

When the lifting adjustment is in place, the movable pipe 2 is released, due to the elastic forces of the one or more elastic bodies 35, the one or more sliders 34 is disposed at the lowest position, that is, abuts an upper side of the bottom ring 311, to enable the friction pads 343 to tightly hold the movable pipe 2, and the mounting member 1 and the movable pipe 2 are relatively static, to achieve stepless lifting.

The stepless lifting device of this embodiment, the force value of the lifting decreases, and the force value of the lowering increases, the two force values are approximate to each other, a hand feeling of the control is good, and a comfort of the control is improved.

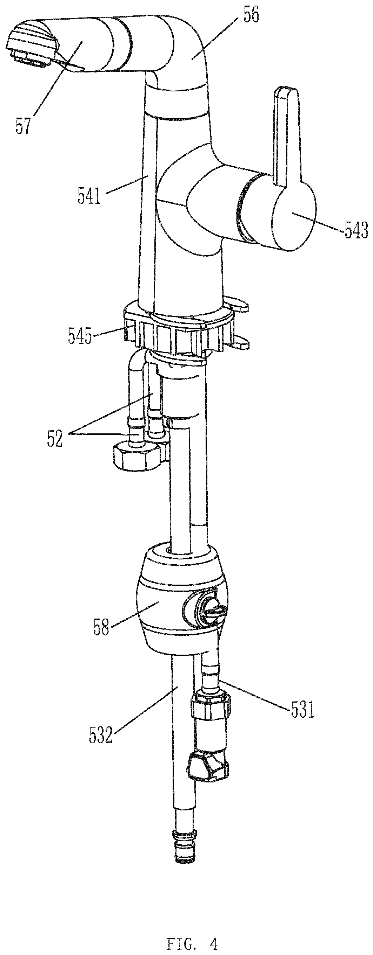

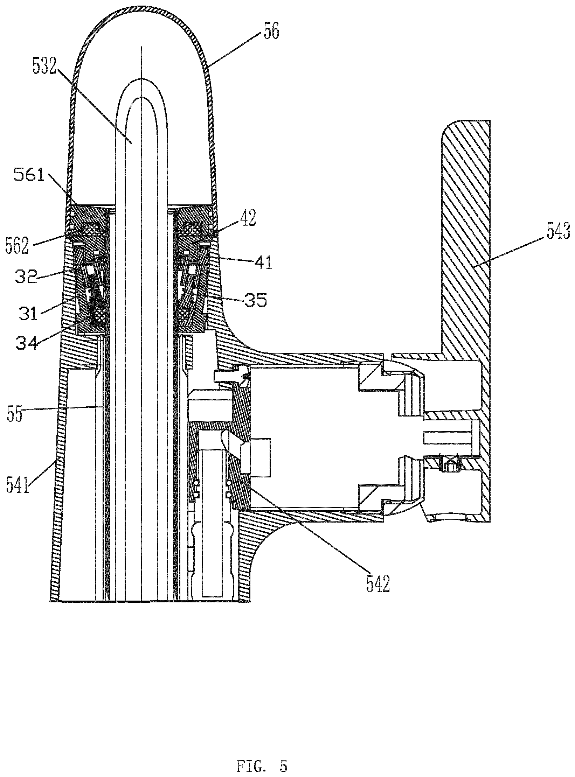

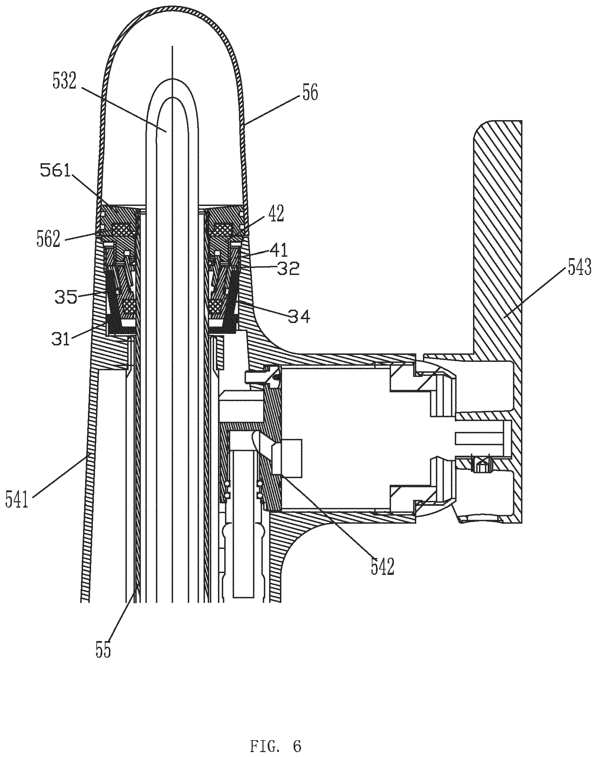

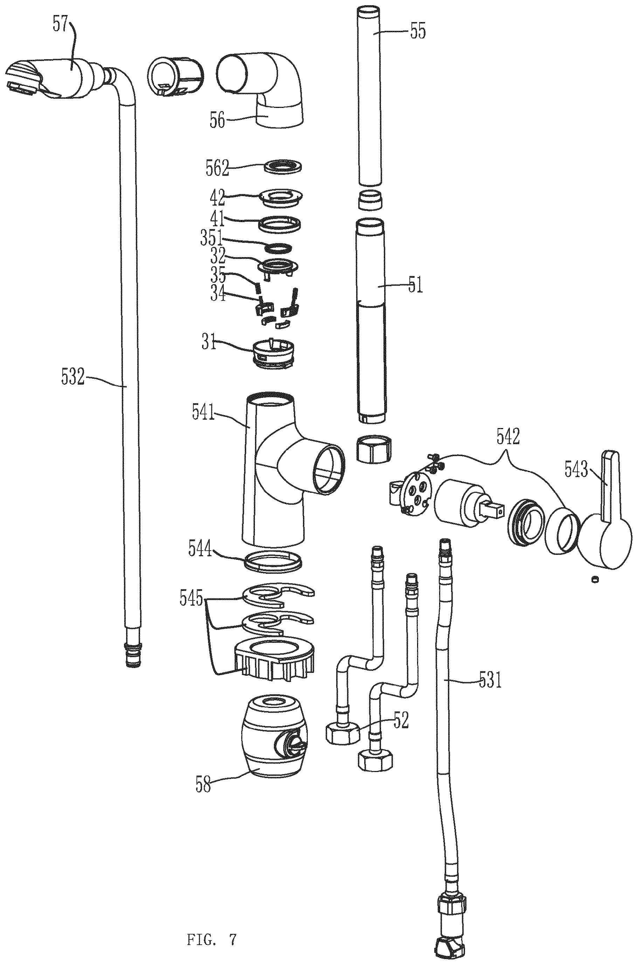

Referring to FIGS. 4-7, a stepless liftable faucet using the stepless liftable device. The stepless lifting faucet is, for example, a basin faucet, it comprises a fixed sleeve 51, one or more water inlet pipes 52, a first water outlet pipe 531, a second water outlet pipe 532, a faucet main body, a liftable pipe 55 slidably connected to the fixed sleeve 51 and configured to be lifted up and lowered down, a liftable body 56 fixedly disposed in the liftable pipe 55, a water outlet portion 57 fixedly disposed on the liftable body 56, a weight hammer 58 and the stepless liftable device. The one or more water inlet pipes 52 comprise cold-hot water inlet pipes, the faucet main body comprises a faucet body 541, a control valve 542 disposed in the faucet body 541 and a handle 543 operatively connected to the control valve 542 to achieve control, the faucet body 541 is fixedly disposed on an outer side of the fixed sleeve 51, the control valve 542 is connected to the first water outlet pipe 531 and the cold-hot water inlet pipes. The water outlet portion 57 is, in an example, a water outlet shower, the water outlet shower is fixedly disposed on and in communication with the second water outlet pipe 532, the second outlet pipe 532 passes through the faucet body, the liftable pipe and the fixed sleeve, the first water outlet pipe 531 is in communication with the second water outlet pipe 532; the first water outlet pipe 531 is connected to the weight hammer 58.

In this embodiment, a sealing ring 315 is further disposed between the guide cover 32 and the movable pipe 2; a fixed base 561 is disposed in the liftable body 56, the liftable pipe 55 is fixedly connected to the fixed base 561, for example, the liftable pipe 55 is screwed to an inner side of the fixed base 561, a rubber pad 562 is disposed in the fixed base 561, and the rubber pad 562 extends out of a bottom port of the faucet body 56. The faucet body 541 is connected to a countertop by a gasket 544 and a sealing ring 545.

The stepless liftable device of this embodiment can provide the following technical effects.

First, stepless changes can be achieved, more smoothly and more widely. 1. Stepless lifting: to pull or to stop at any position, which is suitable for most consumers, compared with the structure with upper and lower two gearing heights on the market, the consumer experience is better. 2. Large-rang lifting: the lifting and lowering height can reach 120 mm, it has a wide range of applications, compared with the liftable faucets on the market can only be lifted and be lowered within 80 mm, and is increased by 30% in distance. 3. Smooth lifting and lowering: smooth lifting and lowering, and no sudden changes in operating power value, bringing a better consumer experience.

Second, pulling and rotating, no dead ends in use. In daily life, people hope that the faucet can have a wider adjustment angle, for cleaning, and using, the stepless liftable faucet technology meets this need, the water outlet portion can be pulled, and the movable pipe can rotate to left and right.

Third, an amount of a shaking is small. The amount of shaking within 2° is ensured due to a limiting from a 30mm+ O-ring disposed in a front end and an anti-scratch sleeve disposed in a rear end.

Fourth, the application range is wide, and the service life is long. This technology can be applied to a variety of basin faucets or kitchen faucets, and the service life of the stepless lifting and lowering can reach 50,000 times.

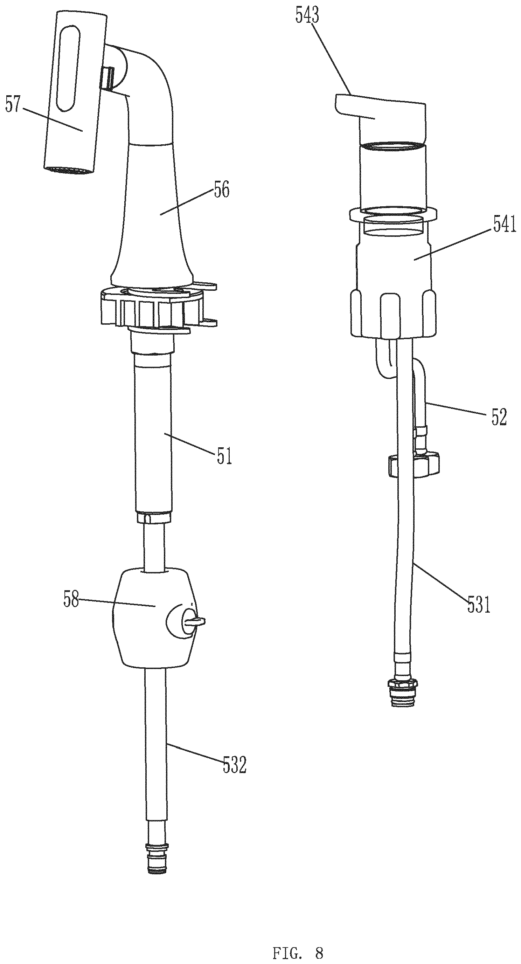

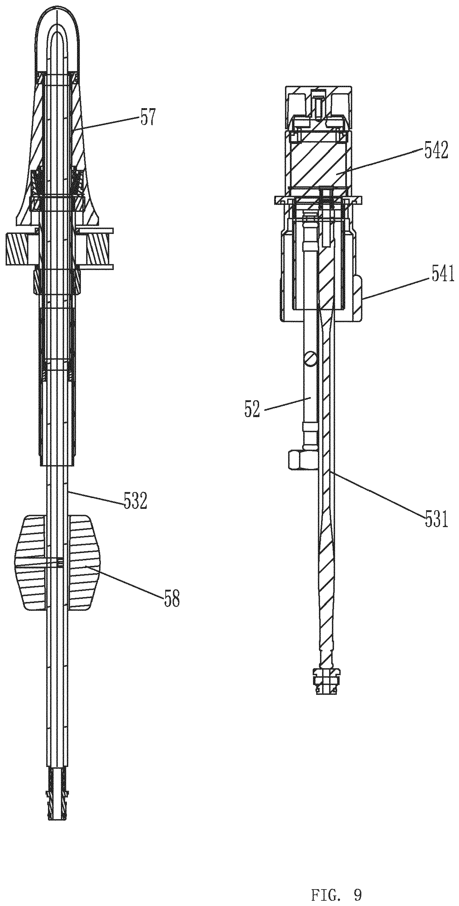

In another preferred embodiment, referring to FIGS. 8 and 9, the stepless liftable faucet is a kitchen faucet, it comprises a fixed sleeve 51, a water inlet pipe 52, a first water outlet pipe 531, a second water outlet pipe 532, and a faucet main body, a liftable pipe 55 slidably connected to the fixed sleeve 51 and configured to be lifted up and lowered down, a liftable body 56 fixedly disposed on the liftable pipe 55, a water outlet portion 57 fixedly disposed on the liftable body 56, a weight hammer 58 and the stepless liftable device. The faucet body is not fixedly connected to the fixed sleeve, and the faucet body and the fixed sleeve 51 are both fixedly disposed on the countertop, but the two are disposed separately to define a separated structure.

The aforementioned embodiments are merely some embodiments of the present disclosure, and the scope of the disclosure of is not limited thereto. Thus, it is intended that the present disclosure cover any modifications and variations of the presently presented embodiments provided they are made without departing from the appended claims and the specification of the present disclosure.

## Claims

1. A stepless liftable device, comprises a mounting member (1) and a movable pipe (2) configured to be lifted up and lowered down and be disposed on the mounting member (1), wherein the stepless liftable device further comprises a mounting base (3) fixedly disposed on the mounting member (1), the movable pipe (2) is configured to be lifted up and lowered down and is disposed on the mounting base (3), the mounting base (3) comprises a mounting cavity (33) facing the movable pipe (2), one or more sliders (34) and one or more elastic bodies (35) are disposed in the mounting cavity (33), the one or more sliders (34) are configured to slide relative to the mounting base (3), the one or more sliders (34) define sliding directions obliquely arranged and are further away from the movable pipe (2) when their positions become higher, the one or more sliders (34) are disposed with friction layers, the one or more elastic bodies (35) are connected to the one or more sliders (34) to generate downward elastic forces along the sliding directions of the one or more sliders (34), and the friction layers cooperate with an outer wall of the movable pipe (2) to generate friction forces, wherein the mounting member (1) extends inward to define a mounting hole (11), the mounting base (3) is fixedly disposed in the mounting hole (11), a fixing member (4) is further fixedly connected to the mounting hole (11), and the mounting base (3) is fixedly disposed in the mounting member (1) through the fixing member (4).

2. The stepless liftable device according to claim 1, **characterized in that**: side walls of the one or more sliders (34) facing the movable pipe (2) extend inward to define mounting grooves (342), friction pads (343) are fixedly disposed in the mounting grooves (342), the friction pads (343) at least partially protrude out of an opening of the mounting grooves (342), and the friction pads (343) comprise the friction layers.

3. The stepless liftable device according to claim 1 and/or 2, **characterized in that**: the mounting base (3) has a ring shape, the movable pipe (2) is connected in the mounting base (3), the one or more sliders (34) comprises a plurality of sliders (34) arranged in an annular shape at intervals, and each of the one or more sliders (34) cooperates with and is disposed with a corresponding one of the one or more elastic bodies (35).

4. The stepless liftable device according to any one or more of claims 1 to 3, **characterized in that**: the one or more sliders (34) are fixedly disposed with one or more guide columns (341) disposed along the sliding directions of the one or more sliders (34), the mounting base (3) is disposed with one or more sliding grooves (323) disposed along the sliding directions of the one or more sliders (34), and the one or more guide columns (341) cooperate with and are connected to the one or more sliding grooves (323).

5. The stepless liftable device according to any one or more of claims 1 to 4, in particular, according to claim 1 or 4, **characterized in that**: the cavity wall of the mounting cavity (33) comprises a guide wall, and the one or more sliders (34) are configured to be slidably connected to the guide wall.

6. The stepless liftable device according to any one or more of claims 1 to 5, **characterized in that**: the mounting cavity (33) has a cavity bottom, and the cavity bottom defines a limit portion configured to limit a maximum sliding position of the one or more sliders (34).

7. The stepless liftable device according to any one or more of claims 1 to 6, **characterized in that**: the mounting base (3) comprises a guide base (31) and a guide cover (32) fixedly covering the guide base (31), and the guide base (31) cooperates with the guide cover (32) to define the mounting cavity (33) surrounding the movable pipe (2).

8. The stepless liftable device according to claim 7, **characterized in that**: the guide cover (32) is disposed with the one or more sliding grooves (323), the one or more sliders (34) are fixedly disposed with one or more guide columns (341), and the one or more guide columns (341) cooperate with and are connected to the one or more sliding grooves (323).

9. The stepless liftable device according to claim 8, **characterized in that**: a rear surface of the guide cover (32) is disposed with one or more fixed columns (322) having a number equal to the number of the one or more sliders (34), and end surfaces of the one or more fixed columns (322) extend inward to define the one or more sliding grooves (323).

10. The stepless liftable device according to any one or more of claims 7 to 9, **characterized in that**: the guide base (31) comprises an inner wall, a cavity wall of the mounting cavity (33) comprises the inner wall, and the one or more sliders (34) cooperate with and are connected to the inner wall.

11. The stepless liftable device according to any one or more of claims 7 to 10, **characterized in that**: the guide base (31) comprises a bottom ring (311) and a peripheral wall (312), a lower peripheral edge of the peripheral wall (312) and an outer peripheral edge of the bottom ring (311) are fixedly connected together, and an inside of the peripheral wall (312), the bottom ring (311), and the guide cover (32) define the mounting cavity (33).

12. A stepless liftable faucet, **characterized in that**, it comprises a fixed sleeve (51), a water inlet pipe (52), a water outlet pipe (53), a faucet body, a liftable pipe (55) configured to be lifted up and lowered down and be slidably connected to the fixed sleeve (51), a liftable body (56) fixedly disposed on the liftable pipe (55), a water outlet portion (57) fixedly disposed on the liftable body (56) and the stepless liftable device according to claim 1; the faucet body is connected to the water inlet pipe (52) and the water outlet pipe (53) to control water outflow, the water outlet pipe (53) passes through the fixed sleeve (51), the liftable pipe (55), and the faucet body and is connected to the water outlet portion (53); the mounting member (1) comprises the faucet body, and the movable pipe (2) comprises the liftable pipe (55).

## Patentansprüche

1. Eine stufenlos anhebbare Vorrichtung, die ein Befestigungsglied (1) und ein bewegbares Rohr (2), das konfiguriert ist, nach oben angehoben und nach unten abgesenkt zu werden und an dem Befestigungsglied (1) angeordnet zu werden, aufweist, wobei die stufenlos anhebbare Vorrichtung ferner eine Befestigungsbasis (3) aufweist, die fest an dem Befestigungsglied (1) angeordnet ist, das bewegbare Rohr (2) ist konfiguriert, nach oben angehoben und nach unten abgesenkt zu werden und ist an der Befestigungsbasis (3) angeordnet, die Befestigungsbasis (3) weist einen Befestigungshohlraum (33) auf, der zu dem bewegbaren Rohr (2) hinweist, eine oder mehrere Gleiteinrichtungen (34) und ein oder mehrere elastische Körper (35) sind in dem Befestigungshohlraum (33) angeordnet, die eine oder mehreren Gleiteinrichtungen (34) sind konfiguriert, um relativ zu der Befestigungsbasis (3) zu gleiten, die eine oder mehreren Gleiteinrichtungen (34) definieren Gleitrichtungen, die schräg angeordnet und weiter weg von dem bewegbaren Rohr (2) sind, wenn ihre Positionen höher werden, die eine oder mehreren Gleiteinrichtungen (34) sind mit Reibungsschichten angeordnet, der eine oder die mehreren elastischen Körper (35) sind mit der einen oder den mehreren Gleiteinrichtungen (34) verbunden, um nach unten hin elastische Kräfte entlang der Gleitrichtungen der einen oder mehreren Gleiteinrichtungen (34) zu erzeugen, und die Reibungsschichten arbeiten mit einer Außenwand des bewegbaren Rohrs (2) zusammen, um Reibungskräfte zu erzeugen, wobei das Befestigungsglied (1) sich nach innen erstreckt, um ein Befestigungsloch (11) zu definieren, die Befestigungsbasis (3) ist fest in dem Befestigungsloch (11) angeordnet, ein Festlegeglied (4) ist ferner fest mit dem Befestigungsloch (11) verbunden, und die Befestigungsbasis (3) ist fest in dem Befestigungsglied (1) durch das Festlegeglied (4) angeordnet.

2. Die stufenlos anhebbare Vorrichtung nach Anspruch 1, **dadurch gekennzeichnet, dass**: Seitenwände der einen oder mehreren Gleiteinrichtungen (34), die zu dem bewegbaren Rohr (2) hinweisen, sich nach innen erstrecken, um Befestigungsnuten (342) zu definieren, Reibungsbeläge (343) fest in den Befestigungsnuten (342) angeordnet sind, die Reibungsbeläge (343) wenigstens teilweise aus einer Öffnung der Befestigungsnuten (342) hervorstehen, und die Reibungsbeläge (343) die Reibungsschichten aufweisen.

3. Die stufenlos anhebbare Vorrichtung nach Anspruch 1 und/oder 2, **dadurch gekennzeichnet, dass**: die Befestigungsbasis (3) eine Ringform hat, das bewegbare Rohr (2) in der Befestigungsbasis (3) verbunden ist, die eine oder mehreren Gleiteinrichtungen (34) eine Vielzahl von Gleiteinrichtungen (34) aufweisen, die in einer Ringform in Abständen angeordnet sind, und jede der einen oder mehreren Gleiteinrichtungen (34) mit einem entsprechenden einen der einen oder mehreren elastischen Körper (35) zusammenarbeitet und mit diesem angeordnet ist.

4. Die stufenlos anhebbare Vorrichtung nach einem oder mehreren der Ansprüche 1 bis 3, **dadurch gekennzeichnet, dass**: die eine oder mehreren Gleiteinrichtungen (34) mit einer oder mehreren Führungssäulen (341), die entlang der Gleitrichtungen der einen oder mehreren Gleiteinrichtungen (34) angeordnet sind, fest angeordnet sind, die Befestigungsbasis (3) mit einer oder mehreren Gleitnuten (323), die entlang der Gleitrichtungen der einen oder mehreren Gleiteinrichtungen (34) angeordnet sind, angeordnet ist, und die eine oder mehreren Führungssäulen (341) mit der einen oder mehreren Gleitnuten (323) zusammenarbeiten und mit dieser bzw. diesen verbunden sind.

5. Die stufenlos anhebbare Vorrichtung nach einem oder mehreren der Ansprüche 1 bis 4, insbesondere nach Anspruch 1 oder 4, **dadurch gekennzeichnet, dass**: die Hohlraumwand des Befestigungshohlraums (33) eine Führungswand aufweist, und die eine oder mehreren Gleiteinrichtungen (34) konfiguriert sind, gleitbar mit der Führungswand verbunden zu sein.

6. Die stufenlos anhebbare Vorrichtung nach einem oder mehreren der Ansprüche 1 bis 5, **dadurch gekennzeichnet, dass**: der Befestigungshohlraum (33) einen Hohlraumboden hat, und der Hohlraumboden einen Begrenzungsteil definiert, der konfiguriert ist, um eine maximale Gleitposition der einen oder mehreren Gleiteinrichtungen (34) zu begrenzen.

7. Die stufenlos anhebbare Vorrichtung nach einem oder mehreren der Ansprüche 1 bis 6, **dadurch gekennzeichnet, dass**: die Befestigungsbasis (3) eine Führungsbasis (31) und eine Führungsabdeckung (32), welche die Führungsbasis (31) fest abdeckt, aufweist, und die Führungsbasis (31) mit der Führungsabdeckung (32) zusammenarbeitet, um den Befestigungshohlraum (33) zu definieren, der das bewegbare Rohr (2) umgibt.

8. Die stufenlos anhebbare Vorrichtung nach Anspruch 7, **dadurch gekennzeichnet, dass**: die Führungsabdeckung (32) mit der einen oder mehreren Gleitnuten (323) angeordnet ist, die eine oder mehreren Gleiteinrichtungen (34) fest mit einer oder mehreren Führungssäulen (341) angeordnet sind, und die eine oder mehreren Führungssäulen (341) mit der einen oder mehreren Gleitnuten (323) zusammenarbeiten und mit dieser bzw. diesen verbunden sind.

9. Die stufenlos anhebbare Vorrichtung nach Anspruch 8, **dadurch gekennzeichnet, dass**: eine hintere Oberfläche der Führungsabdeckung (32) mit einer oder mehreren befestigten Säulen (322) angeordnet ist, die eine Anzahl gleich der Anzahl der einen oder mehreren Gleiteinrichtung (34) haben, und Endoberflächen der einen oder mehreren befestigten Säulen (322) sich nach innen erstrecken, um die eine oder mehreren Gleitnuten (323) zu definieren.

10. Die stufenlos anhebbare Vorrichtung nach einem oder mehreren der Ansprüche 7 bis 9, **dadurch gekennzeichnet, dass**: die Führungsbasis (31) eine Innenwand aufweist, eine Hohlraumwand des Befestigungshohlraums (33) die Innenwand aufweist, und die eine oder mehreren Gleiteinrichtungen (34) mit der Innenwand zusammenarbeiten und mit dieser verbunden sind.

11. Die stufenlos anhebbare Vorrichtung nach einem oder mehreren der Ansprüche 7 bis 10, **dadurch gekennzeichnet, dass**: die Führungsbasis (31) einen Bodenring (311) und eine Umfangswand (312) aufweist, ein unterer Umfangsrand der Umfangswand (312) und ein äußerer Umfangsrand des Bodenrings (311) fest miteinander verbunden sind, und eine Innenseite der Umfangswand (312), der Bodenring (311) und die Führungsabdeckung (32) den Befestigungshohlraum (33) definieren.

12. Eine stufenlos anhebbare Armatur, **dadurch gekennzeichnet, dass** diese eine befestigte Hülse (51), ein Wassereinlassrohr (52), ein Wasserauslassrohr (53), einen Armaturkörper, ein anhebbares Rohr (55), das konfiguriert ist, nach oben angehoben und nach unten abgesenkt zu werden und gleitbar mit der befestigten Hülse (51) verbunden zu werden, einen anhebbaren Körper (56), der fest an dem anhebbaren Rohr (55) angeordnet ist, einen Wasserauslassteil (57), der fest an dem anhebbaren Körper (56) angeordnet ist, und die stufenlos anhebbare Vorrichtung nach Anspruch 1 aufweist; der Armaturkörper ist mit dem Wassereinlassrohr (52) und dem Wasserauslassrohr (53) verbunden, um Wasserausströmung zu steuern, das Wasserauslassrohr (53) verläuft durch die befestigte Hülse (51), das anhebbare Rohr (55) und den Armaturkörper und ist mit dem Wasserauslassteil (53) verbunden; das Befestigungsglied (1) weist den Armaturkörper auf, und das bewegbare Rohr (2) weist das anhebbare Rohr (55) auf.

## Revendications

1. Dispositif soulevable de manière continue, comprend un organe de montage (1) et un tuyau mobile (2) configuré pour être soulevé et abaissé et pour être disposé sur l'organe de montage (1), dans lequel le dispositif soulevable de manière continue comprend en outre une base de montage (3) disposée fixement sur l'organe de montage (1), le tuyau mobile (2) est configuré pour être soulevé et abaissé et est disposé sur la base de montage (3), la base de montage (3) comprend une cavité de montage (33) faisant face au tuyau mobile (2), un ou plusieurs coulisseaux (34) et un ou plusieurs corps élastiques (35) sont disposés dans la cavité de montage (33), le un ou plusieurs coulisseaux (34) sont configurés pour coulisser par rapport à la base de montage (3), le un ou plusieurs coulisseaux (34) définissent des directions de coulissement arrangées obliquement et sont plus éloignés du tuyau mobile (2) quand leurs positions deviennent plus hautes, le un ou plusieurs coulisseaux (34) sont disposés avec des couches de friction, le un ou plusieurs corps élastiques (35) sont reliés au un ou plusieurs coulisseaux (34) pour générer des forces élastiques le long des directions de coulissement du un ou plusieurs coulisseaux (34), et les couches de friction coopèrent avec une paroi extérieure du tuyau mobile (2) pour générer des forces de friction, dans lequel l'organe de montage (1) s'étend vers l'intérieur pour définir un trou de montage (11), la base de montage (3) est disposée fixement dans le trou de montage (11), un organe de fixation (4) est en outre relié fixement au trou de montage (11), et la base de montage (3) est disposée fixement dans l'organe de montage (1) à travers l'organe de fixation (4).

2. Dispositif soulevable de manière continue selon la revendication 1, **caractérisé en ce que** : des parois latérales du un ou plusieurs coulisseaux (34) faisant face au tuyau mobile (2) s'étendent vers l'intérieur pour définir des rainures de montage (342), des coussinets de friction (343) sont disposés fixement dans les rainures de montage (342), les coussinets de friction (343) dépassent au moins partiellement d'une ouverture des rainures de montage (342), et les coussinets de friction (343) comprennent les couches de friction.

3. Dispositif soulevable de manière continue selon la revendication 1 et/ou 2, **caractérisé en ce que** : la base de montage (3) a une forme annulaire, le tuyau mobile (2) est relié dans la base de montage (3), le un ou plusieurs coulisseaux (34) comprend une pluralité de coulisseaux (34) arrangée en une forme annulaire à intervalles, et chacun des un ou plusieurs coulisseaux (34) coopère et est disposé avec l'un correspondant des un ou plusieurs corps élastiques (35).

4. Dispositif soulevable de manière continue selon l'une au moins des revendications 1 à 3, **caractérisé en ce que** : le un ou plusieurs coulisseaux (34) sont disposés fixement avec une ou plusieurs colonnes de guidage (341) disposées le long des directions de coulissement du un ou plusieurs coulisseaux (34), la base de montage (3) est disposée avec une ou plusieurs rainures de coulissement (323) disposées le long des directions de coulissement du un ou plusieurs coulisseaux (34), et la une ou plusieurs colonnes de guidage (341) coopèrent avec et sont reliées à la une ou plusieurs rainures de coulissement (323).

5. Dispositif soulevable de manière continue selon l'une au moins des revendications 1 à 4 en particulier selon la revendication 1 ou 4, **caractérisé en ce que** : la paroi de cavité de la cavité de montage (33) comprend une paroi de guidage, et le un ou plusieurs coulisseaux (34) sont configurés pour être reliés de manière coulissante à la paroi de guidage.

6. Dispositif soulevable de manière continue selon l'une au moins des revendications 1 à 5, **caractérisé en ce que** : la cavité de montage (33) a un fond de cavité, et le fond de cavité définit une partie limite configurée pour limiter une position de coulissement maximum du un ou plusieurs coulisseaux (34).

7. Dispositif soulevable de manière continue selon l'une au moins des revendications 1 à 6, **caractérisé en ce que** : la base de montage (3) comprend une base de guidage (31) et un couvercle de guidage (32) couvrant fixement la base de guidage (31), et la base de guidage (31) coopère avec le couvercle de guidage (32) pour définir la cavité de montage (33) entourant le tuyau mobile (2).

8. Dispositif soulevable de manière continue selon la revendication 7, **caractérisé en ce que** : le couvercle de guidage (32) est disposé avec la une ou plusieurs rainures de coulissement (323), le un ou plusieurs coulisseaux (34) sont disposés fixement avec une ou plusieurs colonnes de guidage (341), et la une ou plusieurs colonnes de guidage (341) coopèrent avec et sont reliées à la une ou plusieurs rainures de coulissement (323).

9. Dispositif soulevable de manière continue selon la revendication 8, **caractérisé en ce que** : une surface arrière du couvercle de guidage (32) est disposée avec une ou plusieurs colonnes fixes (322) ayant un nombre égal au nombre du un ou plusieurs coulisseaux (34), et des surfaces d'extrémité de la une ou plusieurs colonnes de guidage (341) s'étendent vers l'intérieur pour définir la une ou plusieurs rainures de coulissement (323).

10. Dispositif soulevable de manière continue selon l'une au moins des revendications 7 à 9, **caractérisé en ce que** : la base de guidage (31) comprend une paroi intérieure, une paroi de cavité de la cavité de montage (33) comprend la paroi intérieure, et le un ou plusieurs coulisseaux (34) coopèrent avec et sont reliés à la paroi intérieure.

11. Dispositif soulevable de manière continue selon l'une au moins des revendications 7 à 10, **caractérisé en ce que** : la base de guidage (31) comprend une bague de fond (311) et une paroi périphérique (312), un bord périphérique inférieur de la paroi périphérique (312) et un bord périphérique extérieur de la bague de fond (311) sont reliés fixement l'un à l'autre, et un côté intérieur de la paroi périphérique (312), la bague de fond (311), et le couvercle de guidage (32) définissent la cavité de montage (33).

12. Robinet soulevable de manière continue, **caractérisé en ce qu'**il comprend un manchon fixe (51), un tuyau d'entrée d'eau (52), un tuyau de sortie d'eau (53), un corps de robinet, un tuyau soulevable (55) configuré pour être soulevé et abaissé et pour être relié de manière coulissante au manchon fixe (51), un corps soulevable (56) disposé fixement sur le tuyau soulevable (55), une partie de sortie d'eau (57) disposée fixement sur le corps soulevable (56) et le dispositif soulevable de manière continue selon la revendication 1 ; le corps de robinet est relié au tuyau d'entrée d'eau (52) et au tuyau de sortie d'eau (53) pour commander l'écoulement d'eau, le tuyau de sortie d'eau (53) passe à travers le manchon fixe (51), le tuyau soulevable (55), et le corps de robinet et est relié à la partie de sortie d'eau (53) ; l'organe de montage (1) comprend le corps de robinet, et le tuyau mobile (2) comprend le tuyau soulevable (55).
